# EUROPÄISCHE PATENTANMELDUNG

(11) **EP 1 621 399 A1**
(43) Veröffentlichungstag der Anmeldung: **01.02.2006**
(21) Anmeldenummer: 04017799.0
(22) Anmeldetag: 28.07.2004
(51) Int. Cl.: B60P 7/13, B60P 1/64

(54) **Vorrichtung zur Änderung der Verriegelungshöhe eines Containers auf einem Fahrzeugchassis**

(71) Anmelder: Stuht, Holger, 24537 Neumünster (DE); Backof, Kurt, 21465 Wentorf (DE)
(72) Erfinder: Stuht, Holger, 24537 Neumünster (DE); Backof, Kurt, 21465 Wentorf (DE)
(74) Vertreter: Meyer, Ludgerus

(57) **Zusammenfassung**

Die Erfindung betrifft eine Vorrichtung zur Änderung der Verriegelungshöhe eines Containers auf einem Fahrzeugchassis, mit einem an dem Fahrzeugchassis um eine horizontale Drehachse (2) schwenkbar gelagerten Drehzapfen (5, 6), der in einen Verriegelungsbeschlag (4) des Containers einführbar ist. Erfindungsgemäß ist ein erster Drehzapfen (5) am Ende eines ersten Arms eines um die Drehachse (2) schwenkbaren Schwenkhebels (3) befestigt, und ein zweiter Drehzapfen (6) ist am Ende eines zweiten Arms des Schwenkhebels (3) befestigt. Die Längen der beiden Arme sind jeweils so gewählt, dass ein Container bei Aufsetzen des zugeordneten Verriegelungsbeschlages (4) auf den ersten oder zweiten Drehzapfen (5, 6) in einer ersten oder zweiten Höhe auf dem Fahrzeugchassis verriegelbar ist.

## Beschreibung

Die Erfindung betrifft eine Vorrichtung zur Änderung der Verriegelungshöhe eines Containers auf einem Fahrzeugchassis nach dem Oberbegriff des Anspruchs 1.

Zum Containertransport über Land werden heute in der Regel Fahrzeugchassis verwendet, die als Sattelauflieger ausgebildet sind und von einem Zugfahrzeug gezogen werden. Auf solchen Fahrzeugchassis können ein langer Container oder auch zwei kurze Container transportiert werden. Für den Fall, dass ein langer Container mit Gooseneck-Tunnel zu transportieren ist, liegt ein solcher Container vollständig auf dem hinteren tiefer gelegten Teil des Fahrzeugchassis auf und der Hals des Chassis mit der Verbindung zwischen Zugfahrzeug und Fahrzeugchassis, d. h. der sogenannte Königzapfen, befindet sich innerhalb des Gooseneck-Tunnels des Containers. Die Verriegelung des Containers erfolgt auf dem Fahrzeugchassis daher in einer Ebene, die der Oberseite des hinteren Teils des Fahrzeugchassis entspricht.

Wenn zwei kurze Container transportiert werden sollen, liegt der hintere Container ebenfalls unmittelbar auf der Ebene des Fahrzeugchassis auf. Der vordere Container, der als kurzer Container in der Regel keinen Gooseneck-Tunnel aufweist, muss daher in einer etwas höheren Position gesichert werden.

Aus der DE G 91 14 903 U1 ist es hierzu bekannt, die für den vorderen Container benötigte höhere Verriegelungshöhe durch Hochklappen von Drehverschlüssen zu erreichen. Der hintere Container verbleibt jedoch in der Ebene des Fahrzeugchassis. Die Druckschrift dazu schlägt vor, neben den bereits auf einem Fahrzeugchassis vorhandenen Drehverschlüssen zusätzliche klappbare Drehverschlüsse vorzusehen, die bei Bedarf in eine Arbeitsstellung geklappt werden können, die eine höhere Verschlussebene der Verriegelungseinrichtungen definiert. Bei Nichtgebrauch werden diese Drehverschlüsse nach unten geklappt, so dass sie unterhalb der oberseitigen Ebene des Fahrzeugchassis verschwinden. Ein derartig ausgestattetes Fahrzeugchassis ist sowohl für Container kurzer als auch langer Bauart mit oder ohne Gooseneck-Tunnel verwendbar.

Die Verriegelungseinrichtungen eines solchen Fahrzeugchassis müssen jeweils von Hand in die richtige Position gebracht werden, abhängig von der Art des zu transportierenden Containers. Dabei ist nicht auszuschließen, dass aus Nachlässigkeit eine falsche Verriegelung betätigt wird, so dass auf Grund fehlender oder falscher Verriegelung gefährliche Situationen entstehen können.

Der Erfindung liegt die Aufgabe zugrunde, eine vereinfachte Vorrichtung zur Änderung der Verriegelungshöhe eines Containers auf einem Fahrzeugchassis anzugeben, mit deren Hilfe ein Containertransport von kurzen Containern und langen Container mit und ohne Gooseneck-Tunnel möglich ist, wobei die Verriegelung einfach und sicher ist.

Diese Aufgabe wird durch die im Anspruch 1 angegebene Erfindung gelöst. Vorteilhafte Weiterbildungen der Erfindung sind in Unteransprüchen angegeben.

Die Erfindung geht aus von einer Vorrichtung zur Änderung der Verriegelungshöhe eines Containers auf einem Fahrzeugchassis, mit einem an dem Fahrzeugchassis um eine horizontale Drehachse schwenkbar gelagerten Drehzapfen, der in einen Verriegelungsbeschlag des Containers einführbar ist. Erfindungsgemäß ist ein erster Drehzapfen am Ende eines ersten Arms eines um die Drehachse schwenkbaren Schwenkhebels befestigt und ein zweiter Drehzapfen befindet sich am Ende eines zweiten Arms des Schwenkhebels, wobei der erste Arm eine erste Länge und der zweite Arm eine zweite Länge aufweisen, die jeweils so gewählt sind, dass ein Container beim Aufsetzen des zugeordneten Verriegelungsbeschlages auf den ersten oder zweiten Drehzapfen in einer ersten oder zweiten Höhe auf dem Fahrzeugchassis verriegelbar ist.

Zur Verriegelung eines Containers in zwei Stellungen ist daher lediglich eine einzige Verriegelungsvorrichtung erforderlich, die schwenkbar ausgebildet ist. Die Verriegelungsvorrichtung enthält zwei Drehzapfen, die an einem Schwenkhebel mit zwei unterschiedlich langen Armen befestigt sind. Wenn der Drehzapfen an dem längeren Arm in die Arbeitsstellung gekippt ist, d. h. in eine Höhe oberhalb des Fahrzeugchassis, befindet sich der zweite Drehzapfen am kürzeren Arm des Schwenkhebels in einer Stellung unterhalb der Fahrzeugchassisebene. Wenn die Verriegelungsvorrichtung nun verschwenkt wird, befindet sich der zweite Drehzapfen in der Ebene des Fahrzeugchassis und der erste Drehzapfen liegt unterhalb dieser Ebene. Je nach Anforderungen können die Drehzapfen daher in unterschiedlicher Höhenstellung verwendet werden.

In einer bevorzugten Ausführungsform sind der erste Arm und der zweite Arm im wesentlichen aus einem diagonal und rechtwinklig zur Drehachse verlaufenden aus zwei miteinander verbundenen parallelen Platten gebildeten Schwenkhebel ausgestaltet, an dessen Enden die Drehzapfen befestigt sind. Damit werden die Drehzapfen jeweils zwangsweise so betätigt, dass immer nur ein Drehzapfen in eine Arbeitsstellung gebracht werden kann.

Vorzugsweise sind die Arme in der jeweils gewünschten Arbeitsstellung arretierbar. In der einen Schwenkstellung kann der Schwenkhebel gegen einen Anschlag anstoßen, wenn der Drehzapfen belastet ist, während in der anderen Drehstellung des Schwenkhebels der nicht in die Arbeitsstellung gebrachte Drehzapfen in eine am Fahrzeugchassis angeordnete Halteplatte eingreifend ausgebildet sein kann, so dass der Schwenkhebel auch in dieser Stellung verriegelt ist. Dies verhindert auch Klappern und unnötiges Bewegen der Drehzapfen während des Transports.

Vorzugsweise verläuft die Drehachse der Verriegelungsvorrichtung parallel zur Fahrzeugchassis-Längsachse. Damit ist der Raumbedarf in Längsrichtung des Fahrzeuges minimiert.

Die Achsrichtungen des ersten und zweiten Drehzapfens sind insbesondere um etwa 145° gegeneinander versetzt, so dass in der jeweiligen Arbeitsstellung eines Drehzapfens der jeweils andere Drehzapfen vollständig unterhalb des Fahrzeugchassis liegt.

Die Erfindung wird nachstehend anhand eines Ausführungsbeispiels näher erläutert. Es zeigen:
- Fig. 1: eine Seitenansicht durch eine Verriegelungsvorrichtung mit einem Drehzapfen in erhöhter Arbeitsstellung,
- Fig. 2: eine Seitenansicht einer Verriegelungsvorrichtung mit einem Drehzapfen in niedriger Arbeitsstellung,
- Fig. 3: eine Schnittansicht durch eine Verriegelungsvorrichtung entsprechend Fig. 1,
- Fig. 4: eine Schnittansicht einer Verriegelungsvorrichtung entsprechend Fig. 2, und
- Fig. 5: eine Querschnittsansicht durch eine Verriegelungsvorrichtung.

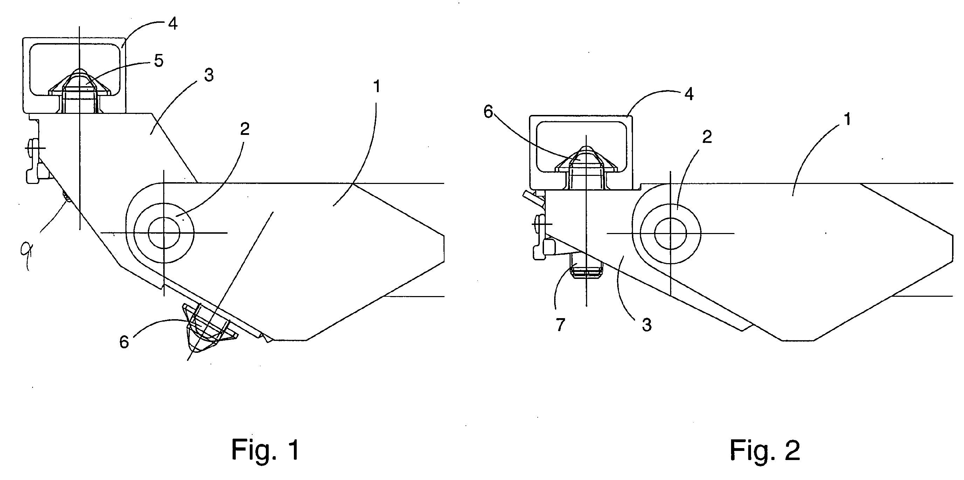

Die in Fig. 1 dargestellte Verriegelungsvorrichtung enthält eine erste Seitenplatte, die unmittelbar am Fahrzeugchassis oder einem am Fahrzeugchassis angeordneten Containerträger befestigt ist. Quer zur ersten Seitenplatte verläuft eine von den Seitenplatten getragene Drehachse 2, um die ein Schwenkhebel 3 schwenkbar angeordnet ist. Fig. 1 zeigt das längere Ende des Schwenkhebels 3, an dessen Ende ein erster Drehzapfen 5 angeordnet ist, der in der Figur in einen Verriegelungsbeschlag 4 eines Containers eingreift und der einstückig mit einer in Fig. 2 gezeigten Hubbolzen ausgebildet ist. Am gegenüberliegenden Ende des exzentrisch über die Drehachse 2 gelagerten Schwenkhebels 3 befindet sich ein zweiter Drehzapfen 6, der in der Arbeitsstellung des ersten Drehzapfens 5 unterhalb der Fahrzeugchassisebene abgesenkt ist.

Fig. 2 zeigt eine Ansicht, in der der Schwenkhebel sich in einer Stellung befindet, in der der zweite Drehzapfen 6 in Arbeitsstellung geschwenkt ist, in der er in einem Verriegelungsbeschlag 4 eines Containers eingreift, der sich in der Ebene der Oberfläche des Fahrzeugchassis befindet.

Die Verdrehung des Drehzapfens um die eigene Achse zur Herstellung des Verriegelungszustandes erfolgt über Verdrehung des einstückig mit dem Drehzapfen 6 ausgebildeten Hubbolzens 7.

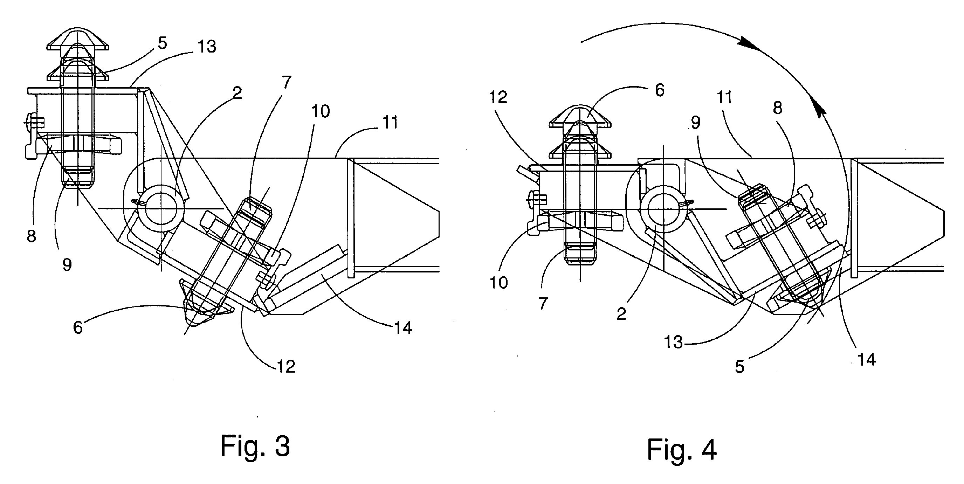

In Fig. 3 ist eine Verriegelungsvorrichtung gemäß Fig. 1 in Schnittansicht dargestellt. Die Figur zeigt, dass die erste Auflagefläche 13 des ersten Drehzapfens zur Aufnahme eines Container-Eckbeschlages sich oberhalb der Fahrzeugchassisebene 11 befindet, so dass dadurch ein Container in erhöhter Stellung arretierbar ist. Die Arretierung selbst erfolgt über eine Verdrehung des ersten Hubbolzens 9 und Verriegelung mittels des ersten Verschlusses 8 in an sich bekannter Weise.

Der zweite Drehzapfen 6 befindet sich unterhalb der Fahrzeugchassisebene 11, wobei das untere Ende der Anschlagfläche 12 gegen einen Anschlag 14 des Fahrzeugchassis bzw. -trägers anstößt, so dass der Verschwenkwinkel des Schwenkhebels 3 durch den Anschlag 14 begrenzt ist.

In Fig. 4 ist der Schwenkhebel 3 um etwa 145° im Uhrzeigersinn verschwenkt dargestellt, wobei der zweite Drehzapfen 6 in Arbeitsstellung geschwenkt ist, in der die zweite Auflagefläche 12 im wesentlichen in der Ebene 11 des Fahrzeugchassis liegt. Die Verriegelung des zweiten Drehzapfens 6 mit dem Verriegelungsbeschlag des Containers erfolgt in bekannter Weise über ein Anheben des Hubbolzens 7 und Verriegelung des zweiten Verschlusses 10.

Um ein Rückschwenken des Schwenkhebels 3 zu verhindern, greift der erste Drehzapfen 5 in den Anschlag 14 ein, indem er in gleicher Weise wie beim Eingriff in einen Verriegelungsbeschlag im Anschlag 14 verriegelt wird. Damit ergibt sich eine gesicherte Arbeitsstellung des zweiten Drehzapfens 6 in niedriger Position.

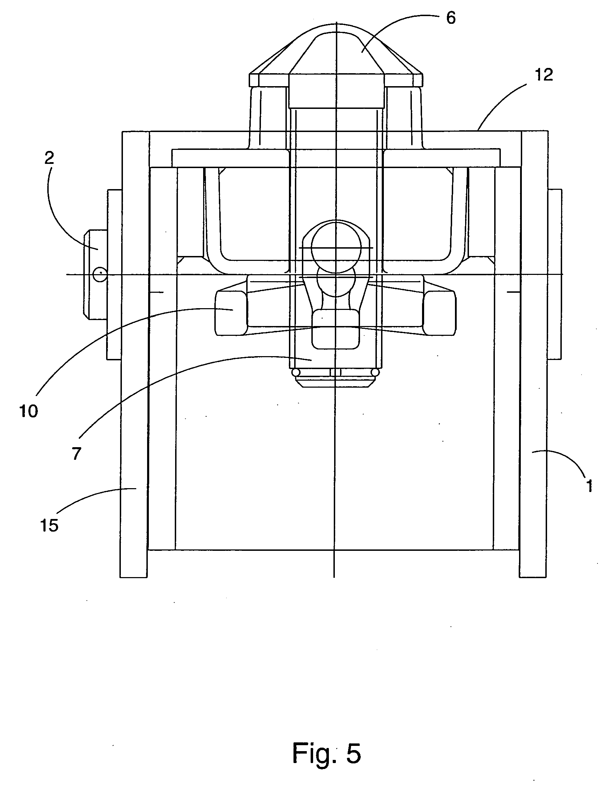

Fig. 5 zeigt eine Seitenansicht des Schwenkhebels mit erster Seitenplatte 1 und zweiter Seitenplatte 15, zwischen denen der Drehzapfen 6 aufgenommen ist. Dieser ist auf bekannte Weise über den Hubbolzen 7 und den Verschluss 10 verriegelbar.

Die Erfindung nutzt zwei Drehzapfen, die an einem einzigen Schwenkhebel befestigt sind, um Container in zwei unterschiedlichen Höhen zu verriegeln. Auf vorteilhafte Weise wird in der Arbeitsstellung des niedrigeren Drehverschlusses der zur Verriegelung eines Containers in höherer Arbeitsstellung dienende Drehverschluss verwendet, um den Schwenkhebel in der Arbeitsstellung des niedrigeren Verschlusses zu sichern.

Die Erfindung ist mechanisch einfach aufgebaut und funktionssicher. In beiden Stellungen des Schwenkhebels ergibt sich eine definierte Anschlagposition. Dies verhindert außerdem unnötiges Klappern während des Transportes.

### Bezugszeichen

- 1: erste Seitenplatte
- 2: Drehachse
- 3: Schwenkhebel
- 4: Verriegelungsbeschlag des Containers
- 5: erster Drehzapfen
- 6: zweiter Drehzapfen
- 7: zweiter Bolzen
- 8: erster Verschluss
- 9: erster Hubbolzen
- 10: zweiter Verschluss
- 11: Fahrzeugchassisebene
- 12: zweite Auflagefläche
- 13: erste Auflagefläche
- 14: Anschlag
- 15: zweite Seitenplatte

## Patentansprüche

1. Vorrichtung zur Änderung der Verriegelungshöhe eines Containers auf einem Fahrzeugchassis, mit einem an dem Fahrzeugchassis um eine horizontale Drehachse (2) schwenkbar gelagerten Drehzapfen (5, 6), der in einen Verriegelungsbeschlag (4) des Containers einführbar ist, **dadurch gekennzeichnet, dass** ein erster Drehzapfen (5) am Ende eines ersten Arms eines um die Drehachse (2) schwenkbaren Schwenkhebels (3) befestigt ist, und dass ein zweiter Drehzapfen (6) am Ende eines zweiten Arms des Schwenkhebels (3) befestigt ist, wobei der erste Arm eine erste Länge und der zweite Arm eine zweite Länge aufweisen, die jeweils so gewählt sind, dass ein Container bei Aufsetzen des zugeordneten Verriegelungsbeschlages (4) auf den ersten oder zweiten Drehzapfen (5, 6) in einer ersten oder zweiten Höhe auf dem Fahrzeugchassis verriegelbar ist.

2. Vorrichtung nach Anspruch 1, **dadurch gekennzeichnet, dass** der erste Arm und der zweite Arm im wesentlichen aus einem diagonal und rechtwinklig zur Drehachse verlaufenden aus zwei miteinander verbundenen parallelen Platten (1, 15) gebildeten Schwenkhebel (3) gebildet sind, an dessen Enden die Drehzapfen (5, 6) befestigt sind.

3. Vorrichtung nach Anspruch 1 oder 2, **dadurch gekennzeichnet, dass** die Arme in der jeweils verwendeten Arbeitsstellung arretierbar sind.

4. Vorrichtung nach Anspruch 3, **dadurch gekennzeichnet, dass** die Arretierung durch Verriegelung des jeweils nicht der Verriegelung eines Containers dienenden Drehzapfens (5, 6) mit einer am Fahrzeugchassis angeordneten Halteplatte erfolgt.

5. Vorrichtung nach Anspruch 3, **dadurch gekennzeichnet, dass** die Arretierung in der niedrigen Verriegelungsstellung des Containers durch Verriegelung des nicht zur Verriegelung des Containers dienenden Drehzapfens mit einer am Fahrzeugchassis angeordneten Halteplatte erfolgt.

6. Vorrichtung nach Anspruch 1, **dadurch gekennzeichnet, dass** die Drehachse (2) parallel zur Fahrzeugchassis-Längsachse verläuft.

7. Vorrichtung nach einem oder mehreren der vorhergehenden Ansprüche, **dadurch gekennzeichnet, dass** die Achsrichtung der ersten und zweiten Drehzapfen um etwa 145° gegeneinander versetzt an dem ersten und zweiten Arm ausgerichtet sind, so dass in einer Verriegelungsstellung, in der der Drehzapfen an dem Arm kurzer Länge in einer Ebene mit der Fahrzeugchassisebene verläuft, der an dem Schwenkhebel (3) gegenüberliegende Drehzapfen sich unterhalb der Fahrzeugchassisebene befindet.
